# EUROPEAN PATENT APPLICATION

(11) **EP 1 909 496 A1**
(43) Date of publication of application: **09.04.2008**
(21) Application number: 07110642.1
(22) Date of filing: 20.06.2007
(51) Int. Cl.: H04N 5/46, H04N 7/16

(54) **Broadcast receiving apparatus for providing commerce broadcast without modifying broadcast picture and broadcast providing method thereof**

(30) Priority: 02.10.2006 KR 20060097164 P
(71) Applicant: Samsung Electronics Co., Ltd., Suwon-si 442-742 Gyeonggi-do (KR)
(72) Inventor: Kim, Jae-cheol, Yeongtong-gu Suwon-si Gyeonggi-do (KR)
(74) Representative: Davies, Robert Ean

(57) **Abstract**

Provided are a broadcast receiving apparatus for providing a commerce broadcast without modifying a broadcast picture, and a broadcast providing method thereof. The broadcast receiving apparatus includes a broadcast receiver (100) which receives a broadcast signal; a broadcast processor (200) which processes the broadcast signal received through the broadcast receiver; and a controller (300) which controls the broadcast processor to perform a processing in compliance with a broadcasting standard of the broadcast signal when determining the received broadcast signal to be a specific broadcast signal. Accordingly, it is possible to prevent inconvenience which may occur because of the difference between the product image viewed by the user through the broadcast picture and the actual image of the ordered product.

## Description

Apparatuses and methods consistent with the present invention relate generally to providing a commerce broadcast without modifying a broadcast picture.

A television (TV), which is a kind of broadcast receiving apparatus, provides a broadcast picture of the received broadcast signal so that a user can watch it. The TV modifies the broadcast picture by displaying the broadcast picture on a screen prior to providing service to the user. The broadcast picture modification refers to the modification of the original picture by adjusting brightness or color of the picture on purpose to increase the user's aesthetic view.

For example, contrast can be increased to improve clarity of the picture, specific colors are adjusted to colors comfortable to the user's eyes, and edges can be highlighted.

Accordingly, the broadcast picture provided from the TV is the modified picture, not the original picture broadcast from the broadcast station.

Meanwhile, commerce broadcasts such as home shopping broadcasts are prevalently used. In the commerce broadcast, likewise, the modified broadcast picture is displayed on the TV, rather than the original picture actually broadcast from the broadcast station.

As a result, cancellation of the ordered products frequently occurs since the product image viewed by the user through the screen is different from the actual image of the ordered product.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

According to an aspect of the present invention, there is provided a broadcast receiving apparatus including a broadcast receiver which receives a broadcast signal; a broadcast processor which processes the broadcast signal received through the broadcast receiver; and a controller which controls the broadcast processor to perform a process in compliance with a broadcasting standard of the broadcast signal when determining the received broadcast signal is a specific broadcast signal.

The specific broadcast signal may be a commerce broadcast signal used for commercial transaction.

The controller, when determining the received broadcast signal is not the specific broadcast signal, may control the broadcast processor to perform a processing different from the processing compliant to the broadcasting standard of the broadcast signal.

The controller may determine whether the broadcast signal is the specific broadcast signal by referring to one of a program identification (ID) contained in the broadcast signal and a channel number of the broadcast signal.

The controller may control the broadcast processor to perform the processing compliant to the broadcasting standard of the broadcast signal when an operation mode of the broadcast receiving apparatus provides a broadcast picture of a specific broadcast without modifying the picture and the received broadcast signal is the specific broadcast signal according to a determination.

The broadcasting standard may be, for example, one of a National Television Standards Committee (NTSC, a Phase Alternating Line (PAL) standard, sequential color with memory (SECAM) standard, an Advanced Common Application Platform (ACAP) standard, an Open Cable Application Platform (OCAP) standard and a Digital Video Broadcasting-Multimedia Home Platform (DVB-MHP) standard.

The broadcast processor may include a decoder which decodes the broadcast signal; an analog-to-digital converter (ADC) which digitizes the broadcast signal; a deinterlacer and scaler which deinterlaces and scales, respectively, the broadcast signal; a video processor which performs a signal processing relating to a video of the broadcast signal; a display panel which displays a broadcast picture of the broadcast signal; and a display driver which drives the display panel. The controller may control at least one of the decoder, the deinterlacer and scaler, the video processor, the display panel, and the display driver to perform the processing compliant to the broadcasting standard of the broadcast signal.

The broadcast processor may include a decoder which executes at least one processing of Y-gain control, UV offset compensation, color demodulation characteristic control, color matrix control, and frequency characteristic control with respect to the broadcast signal. The controller may control the decoder to execute a processing compliant to the broadcasting standard of the broadcast signal.

The broadcast processor may include a deinterlacer and scaler which execute at least one of processing of noise reduction, gradient correlation, frequency characteristic control, sharpness control, and color transient improvement (CTI) with respect to the broadcast signal. The controller may control the deinterlacer and scaler to perform a processing compliant to the broadcasting standard of the broadcast signal.

The broadcast processor may include a video processor which executes at least one processing of frequency characteristic control, black white stretch, linearity control, bit resolution control, luminance transient improvement (LTI), Horizontal Vertical (HV) peaking control, and noise reduction with respect to the broadcast signal. The controller may control the video processor to perform a processing compliant to the broadcasting standard of the broadcast signal.

The broadcast processor may include a display driver which executes at least one processing of White Balance (W/B) tracking, bit resolution control, Grayscale linearity control, and Gamma control with respect to the broadcast signal. The controller may control the display driver to perform a processing compliant to the broadcasting standard of the broadcast signal.

The broadcast processor may include a display panel which executes at least one processing of color gamut control, contrast ratio control, brightness control, focus control, W/B tracking, bit resolution control, Grayscale linearity control, and Gamma control with respect to the broadcast signal. The controller may control the display panel to perform a processing compliant to the broadcasting standard of the broadcast signal.

The broadcast processor may include an ADC which executes at least one processing of auto gain control, ADC linearity control, bit resolution control, and UV offset compensation with respect to the broadcast signal. The controller may control the ADC to perform a processing compliant to the broadcasting standard of the broadcast signal.

According to another aspect of the present invention, there is provided a broadcast providing method including receiving a broadcast signal; and processing the broadcast signal in accordance with a broadcasting standard of the broadcast signal when the received broadcast signal is a specific broadcast signal according to a determination.

The specific broadcast signal may be a commerce broadcast signal used for commercial transaction.

The broadcast providing method may further include performing a processing different from the processing compliant to the broadcasting standard of the broadcast signal when the received broadcast signal is not the specific broadcast signal according to the determination.

The processing operation may determine whether the broadcast signal is the specific broadcast signal by referring to one of a program ID contained in the broadcast signal and a channel number of the broadcast signal.

The broadcast providing method may further include checking an operation mode. The processing operation may be performed when the operation mode provides a broadcast picture of a specific broadcast without modifying the picture at the checking operation.

The broadcasting standard may be one of NTSC, PAL, SECAM, ACAP, OCAP and DVB-MHP.

The processing operation may execute at least one of decoding, digital conversion, deinterlacing, scaling, video related signal processing, and displaying in compliance with the broadcasting standard of the broadcast signal.

The processing operation may execute at least one processing of Y-gain control, UV offset compensation, color demodulation characteristic control, color matrix control, frequency characteristic control, noise reduction, gradient correlation, sharpness control, CTI, black white stretch, linearity control, bit resolution control, LTI, HV peaking control, W/B tracking, Grayscale linearity control, Gamma control, color gamut control, contrast ratio control, brightness control, focus control, auto gain control, and ADC linearity control, on the broadcast signal in accordance with the broadcasting standard of the broadcast signal.

For a better understanding of the invention, and to show how embodiments of the same may be carried into effect, reference will now be made, by way of example, to the accompanying diagrammatic drawings in which:
FIG. 1 is a block diagram of a broadcast receiving apparatus according to an exemplary embodiment of the present invention;
FIG. 2 is a flowchart outlining a broadcast providing method according to an exemplary embodiment of the present invention; and
FIG. 3 is a diagram of an exemplary menu view used to modify the display setting of the commerce broadcast picture.

Throughout the drawings, the same drawing reference numerals will be understood to refer to the same elements, features and structures.

Certain exemplary embodiments of the present invention will now be described in detail with reference to the accompanying drawings.

The matters defined in the description such as a detailed construction and elements are provided to assist in a comprehensive understanding of the exemplary embodiments of the invention and are merely exemplary. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

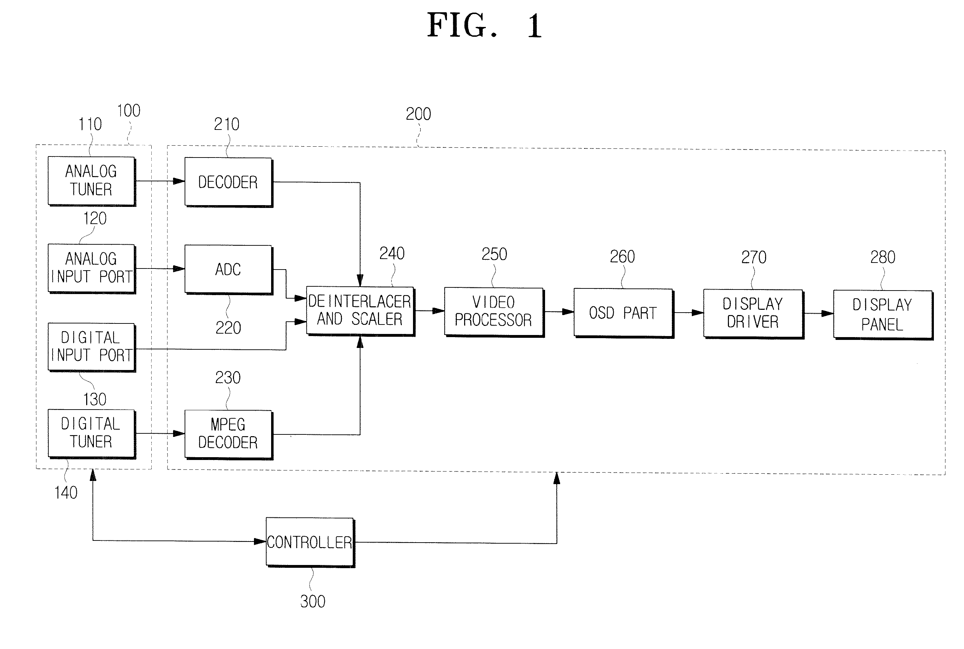

FIG. 1 is a block diagram of a broadcast receiving apparatus according to an exemplary embodiment of the present invention. The broadcast receiving apparatus modifies a picture of the general broadcast but does not modify a picture of the commerce broadcast. The broadcast picture modification refers to the modification of the original picture by changing brightness or color of the picture on purpose to enhance the user's aesthetic view.

In other words, while the broadcast receiving apparatus processes and provides a commerce broadcast signal in compliance with a broadcasting standard, other broadcast signals, excluding the commerce broadcast signal, goes through a processing different from the processing of the broadcasting standard.

As shown in FIG. 1, the broadcast receiving apparatus includes a broadcast receiver 100, a broadcast processor 200, and a controller 300.

The broadcast receiver 100 serves to receive a broadcast signal from outside. The broadcast receiver 100 includes an analog tuner 110, an analog input port 120, a digital input port 130, and a digital tuner 140.

The analog tuner 110 receives an analog broadcast signal from a broadcast station by tuning to a specific channel. The analog input port 120 receives an analog broadcast signal from a external device being connected. The digital input port 130 receives a digital broadcast signal from a connected external device. The digital tuner 140 receives a digital broadcast signal from a broadcast station by tuning to a specific channel.

The external devices, which are connected to the analog input port 120 and the digital input port 130 to provide the broadcast signal to the broadcast receiving apparatus, include a set-top box, a personal computer (PC), and so forth.

The broadcast processor 200 processes the broadcast signal received through the broadcast receiver 100 and provides the broadcast picture to the user. The processing at the broadcast processor 200 is carried out under the control of the controller 300, which will be described in detail.

The broadcast processor 200 includes a decoder 210, an analog-to-digital converter (ADC) 220, a Moving Picture Experts Group (MPEG) decoder 230, a deinterlacer and scaler 240, a video processor 250, an on screen display (OSD) part 260, a display driver 270, and a display panel 280.

The decoder 210 decodes the broadcast signal received from the analog tuner 110 and outputs the decoded broadcast signal. As decoding the broadcast signal, the decoder 210 executes a process, such as Y-gain control, UV offset compensation, color signal demodulation characteristic control, color matrix control, and frequency characteristic control, with respect to the broadcast signal.

The ADC 220 digitizes the analog broadcast signal received through the analog input port 120. As digitizing the analog broadcast signal, the ADC 220 executes a process, such as auto gain control, ADC linearity control, bit resolution control, and UV offset compensation, with respect to the broadcast signal.

The MPEG decoder 230 decodes the broadcast signal received to the digital tuner 140 and outputs the decoded broadcast signal.

The deinterlacer and scaler 240 deinterlaces and scales, respectively, the broadcast signals fed from the decoder 210, the ADC 220, the digital input port 130, and the MPEG decoder 230. Herein, the deinterlacing is to convert the interlaced broadcast signal to the progressive broadcast signal, and the scaling is to transform a size or an aspect ratio of the broadcast picture to be displayed according to the broadcast signal.

During the above processes, the deinterlacer and scaler 240 performs a process such as noise reduction, gradient correlation, frequency characteristic control, sharpness control, and CTI.

The video processor 250 performs a video-related signal processing on the input broadcast signal. In the signal processing, the video processor 250 executes a process such as frequency characteristic control, black white stretch, linearity control, bit resolution control, luminance transient improvement (LTI), HV peaking control, and noise reduction.

The OSD part 260 provides an OSD function which superimposes additional information, such as menu view, on the broadcast output from the video processor 250.

The display driver 270 drives the display panel 280 to display the broadcast output from the OSD part 260 in the display panel 280. In doing so, the display driver 270 performs a process such as W/B tracking, bit resolution control, Grayscale linearity control, and Gamma control, on the broadcast signal.

The display panel 280 is driven by the display driver 270 to display the broadcast picture of the broadcast signal. In doing so, the display panel 280 performs a process such as color gamut control, contrast ratio control, brightness control, focus control, W/B tracking, bit resolution control, Grayscale linearity control, and Gamma control, on the broadcast signal.

The controller 300 controls the operation of the broadcast processor 200 depending on the type of the broadcast signal received at the broadcast receiver 100. In specifically, when determining the broadcast signal received at the broadcast receiver 100 is the commerce broadcast signal, the controller 300 controls the broadcast processor 200 not to modify the broadcast picture.

By contrast, when the broadcast signal received at the broadcast receiver 100 is a broadcast signal other than the commerce broadcast signal, the controller 300 controls the broadcast processor 200 to modify the broadcast picture, which is illustrated in more detail.

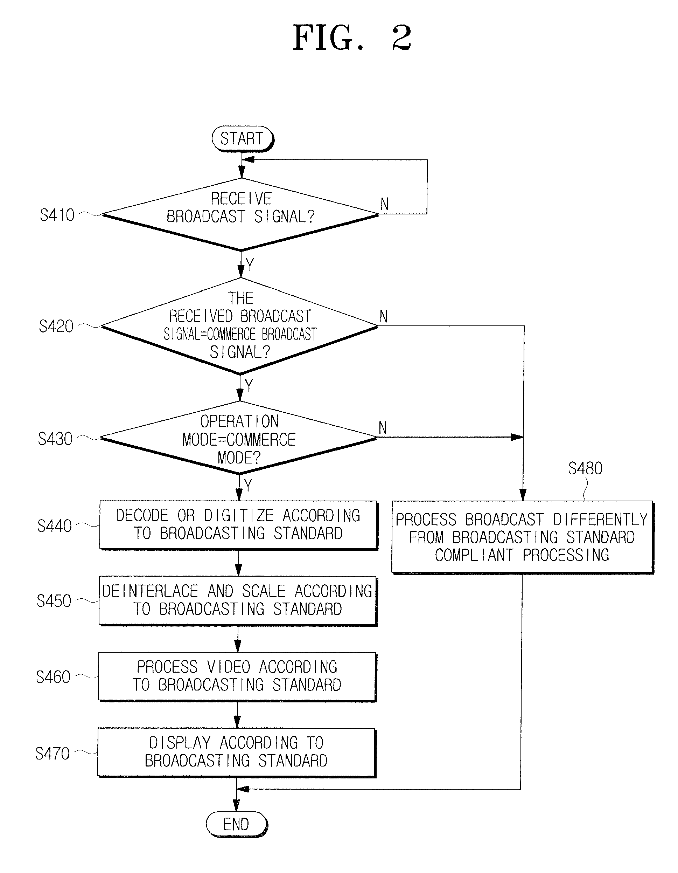

FIG. 2 is a flowchart outlining a broadcast providing method according to an exemplary embodiment of the present invention.

As shown in FIG. 2, when a broadcast signal is received at the broadcast receiver 100 in operation S410-Y, the controller 300 determines whether the received broadcast signal is a commerce broadcast signal in operation S420.

In more detail, in operation S420, the controller 300 can determine whether the broadcast signal is the commerce broadcast signal by referring to a program ID contained in the received broadcast signal. If the program ID in the broadcast signal indicates the commerce broadcast signal, the controller 300 determines that the broadcast signal is the commerce broadcast signal.

In addition, the controller 300 can determine whether the broadcast signal is the commerce broadcast signal by referring to a channel number of the received broadcast signal. If the current channel number is a channel number of the commerce broadcast, the controller 300 determines that the received broadcast signal is the commerce broadcast signal.

Upon determining that the received broadcast signal is the commerce broadcast signal in operation S420-Y, the controller 300 checks whether an operation mode of the broadcast receiving apparatus is a commerce mode in operation S430. In the commerce mode, the broadcast view of the commerce broadcast is provided without the picture modification whereas the broadcast view of the broadcast other than the commerce broadcast is provided by modifying the broadcast picture.

When the operation mode of the broadcast receiving apparatus is the commerce mode in operation S430-Y, the controller 300 controls the decoder 210, or the ADC 220, to execute the decoding or the digital conversion on the broadcast signal in accordance with the broadcasting standard in operation S440.

Specifically, the controller 300 controls the decoder 210 to perform the process such as Y-gain control, UV offset compensation, color demodulation characteristic control, color matrix control, and frequency characteristic control in compliance with the broadcasting standard, or controls the ADC 220 to perform the process such as auto gain control, ADC linearity control, bit resolution control, and UV offset compensation on the broadcast signal in compliance with the broadcasting standard.

In the mean time, the operation S440 is carried out when the broadcast signal is received through the analog tuner 110 or the analog input port 120 of the broadcast receiver 100. When the broadcast signal is received through the digital input port 130 or the digital tuner 140, the operation S440 can be omitted.

Next, the controller 300 controls the deinterlacer and scaler 240 to perform the deinterlacing and the scaling according to the broadcasting standard in operation S450. Specifically, the controller 300 controls the deinterlacer and scaler 240 to perform the process such as noise reduction, gradient correlation, frequency characteristic control, sharpness control, and CTI processing on the broadcast signal according to the broadcasting standard.

Next, the controller 300 controls the video processor 250 to perform the video processing in compliance with the broadcasting standard in operation S460. Specifically, the controller 300 controls the video processor 250 to execute the process such as frequency characteristic control, black white stretch, linearity control, bit resolution control, LTI process, HV peaking control, and noise reduction, on the broadcast signal in compliance with the broadcasting standard.

In operation S470, the controller 300 controls the display driver 270 and the display panel 280 to display the broadcast signal according to the broadcasting standard. In specific, the controller 300 controls the display driver 270 to perform the process such as W/B tracking process, bit resolution control, Grayscale linearity control, and Gamma control, and controls the display panel 280 to perform the process such as color gamut control, contrast ratio control, brightness control, focus control, W/B tracking process, bit resolution control, Grayscale linearity control, Gamma control, with respect to the broadcast signal in compliance with the broadcasting standard.

In contrast, when the received broadcast signal is not the commerce broadcast signal in operation S420-N or when the operation mode of the broadcast receiving apparatus is not the commerce mode even if the commerce broadcast signal is received in operations S420-Y and S430-N, the controller 300 controls the broadcast processor 200 to execute a processing other than the broadcasting standard compliant processing in operation S480.

That is, the controller 300 controls the decoder 210, the ADC 220, the deinterlacer and scaler 240, the video processor 250, the display driver 270, and the display panel 280 of the broadcast processor 200 to modify the picture of the broadcast signal in relation to the input broadcast signal.

So far, when the broadcast signal is the commerce broadcast signal, the commerce broadcast picture is not modified by processing it according to the broadcasting standard.

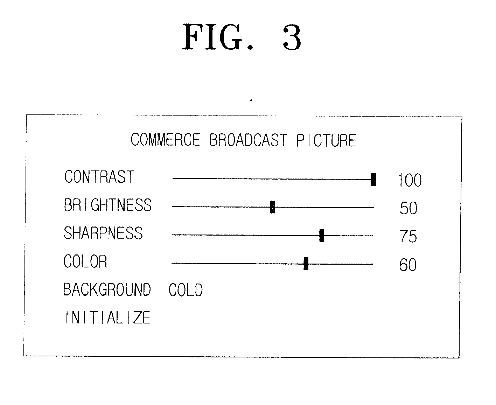

If necessary, the user is allowed to change the display setting of the commerce broadcast picture to reflect the user's color perceptibility or taste. The change of the display setting can be achieved using a menu view provided by the OSD part 260. FIG. 3 shows an exemplary menu view used to control the display setting of the commerce display picture.

By using the menu view of FIG. 3, the user is able to adjust or initialize contrast, brightness, sharpness, color, and background to his/her desired levels. As discussed above, according to an exemplary embodiment of the present invention, the broadcast receiving apparatus and the broadcast providing method thereof modify the picture of the general broadcast but not the picture of the commerce broadcast.

Further, the exemplary embodiment of the present invention, as described herein, exemplifies the commerce broadcast used for the commercial transaction as the broadcast without the picture modification. However, it should be appreciated that embodiments of the present invention are also applicable to a case where a specific broadcast other than the commerce broadcast does not go through the picture modification.

Note that the present invention is not limited to any particular broadcasting standard. Examples of the analog broadcasting standard include NTSC, PAL, SECAM, and the like. Examples of the digital broadcasting standard include ACAP, OCAP, DVD-MHP, and the like. It should be appreciated that the present invention is applicable to other standards besides the above-mentioned standards.

As set forth above, the commerce broadcast can be provided to the user without modifying the picture. Accordingly, the commerce broadcast picture show the original image of the product rather than the modified image. Therefore, it is possible to prevent inconvenience to the user which may occur because of the difference between the product image viewed by the user through the broadcast picture and the actual image of the ordered product.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus comprising:
a broadcast receiver (100) operable to receive a broadcast signal;
a broadcast processor (200) operable to process the broadcast signal; and
a controller (300) operable to control the broadcast processor to perform a first processing in accordance with a broadcasting standard, of the broadcast signal if the broadcast signal is determined to be a specific broadcast signal.

2. The broadcast receiving apparatus of claim 1, wherein the specific broadcast signal is a commerce broadcast signal used for commercial transaction.

3. The broadcast receiving apparatus of claim 1 or 2, wherein the controller (300), if the broadcast signal is determined not be the specific broadcast signal, is operable to control the broadcast processor (200) to perform a second processing that is different from the first processing of the broadcast signal.

4. The broadcast receiving apparatus of any preceding claim, wherein the controller (300) is operable to determine whether the broadcast signal is the specific broadcast signal by referring to one of a program ID contained in the broadcast signal and a channel number of the broadcast signal.

5. The broadcast receiving apparatus of any preceding claim, wherein the controller (300) is operable to control the broadcast processor (200) to perform the first processing of the broadcast signal if an operation mode of the broadcast receiving apparatus provides a broadcast picture of a specific broadcast without modifying the broadcast picture and the broadcast signal is the specific broadcast signal.

6. The broadcast receiving apparatus of any preceding claim, wherein the broadcasting standard is one of a National Television Standards Committee (NTSC) standard, a Phase Alternating Line (PAL) standard, a sequential color with memory (SECAM) standard, an Advanced Common Application Platform (ACAP) standard, an Open Cable Application Platform (OCAP) standard and a Digital Video Broadcasting-Multimedia Home Platform (DVB-MHP) standard.

7. The broadcast receiving apparatus of any preceding claim, wherein the broadcast processor (200) comprises:
a decoder (210) operable to decode the broadcast signal;
an analog-to-digital converter (ADC) (220) operable to digitize the broadcast signal;
a deinterlacer and scaler (240) operable to deinterlace and scale the broadcast signal;
a video processor (250) operable to perform a signal processing relating to a video of the broadcast signal;
a display panel (280) operable to display a broadcast picture of the broadcast signal; and
a display driver (270) operable to drive the display panel,
wherein the controller (300) is operable to control at least one of the decoder (210), the deinterlacer and scaler (240), the video processor (250), the display panel (280), and the display driver (270) to perform the first processing of the broadcast signal.

8. The broadcast receiving apparatus of any preceding claim, wherein the broadcast processor (200) comprises:
a decoder (210) operable to execute at least one processing of Y-gain control, UV offset compensation, color demodulation characteristic control, color matrix control, and frequency characteristic control with respect to the broadcast signal,
wherein the controller (300) is operable to control the decoder to execute the first processing of the broadcast signal.

9. The broadcast receiving apparatus of any preceding claim, wherein the broadcast processor (200) comprises:
a deinterlacer and scaler (240) operable to execute at least one processing of noise reduction, gradient correlation, frequency characteristic control, sharpness control, and color transient improvement (CTI) with respect to the broadcast signal,
wherein the controller (300) is operable to control the deinterlacer and scaler (240) to perform the first processing of the broadcast signal.

10. The broadcast receiving apparatus of any preceding claim, wherein the broadcast processor (200) comprises:
a video processor (250) operable to execute at least one processing of frequency characteristic control, black white stretch, linearity control, bit resolution control, luminance transient improvement (LTI), Horizontal Vertical (HV) peaking control, and noise reduction with respect to the broadcast signal,
wherein the controller (300) is operable to control the video processor (250) to perform the first processing of the broadcast signal.

11. The broadcast receiving apparatus of any preceding claim, wherein the broadcast processor (200) comprises:
a display driver (270) operable to execute at least one processing of White Balance (W/B) tracking, bit resolution control, Grayscale linearity control, and Gamma control with respect to the broadcast signal,
wherein the controller (300) is operable to control the display driver (270) to perform the first processing of the broadcast signal.

12. The broadcast receiving apparatus of any preceding claim, wherein the broadcast processor comprises:
a display panel (280) operable to xecutes at least one processing of color gamut control, contrast ratio control, brightness control, focus control, White Balance (W/B) tracking, bit resolution control, Grayscale linearity control, and Gamma control with respect to the broadcast signal,
wherein the controller (300) is operable to controls the display panel (280) to perform the first processing of the broadcast signal.

13. The broadcast receiving apparatus of any preceding claim, wherein the broadcast processor comprises:
an analog-to-digital converter (ADC) (220) operable to execute at least one processing of auto gain control, ADC linearity control, bit resolution control, and UV offset compensation with respect to the broadcast signal,
wherein the controller (300) is operable to control the ADC (200) to perform the first processing of the broadcast signal.

14. A broadcast providing method comprising:
receiving (S410) a broadcast signal; and
first processing the broadcast signal in accordance with a broadcasting standard of the broadcast signal if the broadcast signal is a specific broadcast signal according to a determination.

15. The broadcast providing method of claim 14, wherein the specific broadcast signal is a commerce broadcast signal used for a commercial transaction.

16. The broadcast providing method of claim 14 or 15, further comprising:
second processing of the broadcast signal, which is different from the first processing of the broadcast signal if the broadcast signal is not the specific broadcast signal according to the determination.

17. The broadcast providing method of any of claims 14 - 16, wherein the first processing determines whether the broadcast signal is the specific broadcast signal by referring to one of a program ID contained in the broadcast signal and a channel number of the broadcast signal.

18. The broadcast providing method of any of claims 14 - 17, further comprising:
Checking (S430) an operation mode,
wherein the first processing is performed if the operation mode provides a broadcast picture of a specific broadcast without modifying the broadcast picture at the checking of the operation mode.

19. The broadcast providing method of any of claims 14 - 18, wherein the broadcasting standard is one of a National Television Standards Committee (NTSC) standard, a Phase Alternating Line (PAL) standard, a sequential color with memory (SECAM) standard, an ACAP standard, an OCAP standard and a DVB-MHP standard.

20. The broadcast providing method of any of claims 14 - 19, wherein the first processing executes at least one of decoding, digital conversion, deinterlacing, scaling, video related signal processing, and displaying of the broadcast signal.

21. The broadcast providing method of any of claims 14 - 20, wherein the first processing executes at least one processing of Y-gain control, UV offset compensation, color demodulation characteristic control, color matrix control, frequency characteristic control, noise reduction, gradient correlation, sharpness control, color transient improvement (CTI), black white stretch, linearity control, bit resolution control, luminance transient improvement (LTI), Horizontal Vertical (HV) peaking control, White Balance (W/B) tracking, Grayscale linearity control, Gamma control, color gamut control, contrast ratio control, brightness control, focus control, auto gain control, and analog-to-digital converter (ADC) linearity control, on the broadcast signal in accordance with the broadcasting standard of the broadcast signal.
